# EUROPÄISCHE PATENTSCHRIFT

(11) **EP 0 479 793 B1**
(45) Veröffentlichungstag und Bekanntmachung des Hinweises auf die Patenterteilung: **09.03.1994**
(21) Anmeldenummer: 90906895.9
(22) Anmeldetag: 14.05.1990
(51) Int. Cl.: F04B 23/02, F04B 21/00, F16L 37/04, F04D 29/60

(54) **TAUCHMOTORPUMPE**
SUBMERSIBLE MOTOR-DRIVEN PUMP
POMPE A MOTEUR SUBMERSIBLE

(30) Priorität: 30.06.1989 DE 3921549
(43) Veröffentlichungstag der Anmeldung: 15.04.1992
(73) Patentinhaber: ABS Pumpen AG, 53785 Lohmar (DE)
(72) Erfinder: KRÄMER, Günter, D-5900 Siegen 1 (Kaan) (DE)
(74) Vertreter: Lippert, Hans-Joachim, Dipl.-Ing.
(86) Internationale Anmeldenummer: DE9000349
(87) Internationale Veröffentlichungsnummer: WO9100428

(56) Entgegenhaltungen:
- CH-A- 0 473 612
- DE-B- 2 555 739
- DE-C- 0 437 032
- FR-A- 1 550 525
- FR-A- 2 307 149
- US-A- 3 592 564

## Beschreibung

Die Erfindung betrifft einen Behälter, insbesondere für Schmutzwasser und Fäkalien, mit einer oberen Öffnung, einer Tauchmotorpumpe und einer Förderrohrleitung, die seitlich dicht aus dem Behälter austritt, wobei die Tauchmotorpumpe ein druckseitig montiertes Rohrleitungsteil aufweist, das in einer vertikalen Ebene um 180° gekrümmt verläuft und dessen freies, etwa vertikal nach unten gerichtetes Ende mit einem freien, etwa vertikal nach oben gerichteten Ende der Förderrohrleitung im Inneren des Behälters verbindbar ist.

Mit Tauchmotorpumpen ausgestattete Behälter für Schmutzwasser und Fäkalien kommen insbesondere dann zum Einsatz, wenn zwischen einer zentralen Kanalisationssammelleitung und dem Ort, wo Schmutzwasser bzw. Fäkalien anfallen, kein genügendes Gefälle besteht, um das anfallende Schmutzwasser unter der Wirkung der Schwerkraft in die Sammelleitung einzuführen.

In diesen Fällen werden das Schmutzwasser bzw. die Fäkalien in einem meist kleineren Behälter gesammelt und mit einer Tauchmotorpumpe, die im Inneren des Behälters angeordnet ist, über eine Förderleitung in die Kanalisation gepumpt. Nach dem Stand der Technik kann die Pumpe mit der Förderleitung im Inneren des Behälters durch manuell verschraubte Rohrleitungsanschlüsse verbunden werden.

Wenn die Tauchmotorpumpe aus dem Inneren des Behälters, der gewöhnlich mit einem oberen Deckel verschließbar ist, herausgenommen werden muß, etwa bei einem Defekt der Pumpe, war es bisher erforderlich, die Rohrleitungsanschlüsse der Pumpe mit der Förderleitung in dem meist gefüllten Behälter manuell zu lösen, um die Pumpe nach oben herausziehen zu können.

Diese manuellen Arbeiten in dem meist mit Schmutzwasser oder Fäkalien gefüllten Behälter sind für das Montagepersonal äußerst unangenehm und auch zeitaufwendig. Dies trifft auch auf das spätere Einsetzen der Tauchmotorpumpe zu.

Aus der US-A-3 592 564 ist eine Schmutzwasserpumpe bekannt, die an seitlichen Führungen in vertikaler Richtung aus dem Behälter gehoben bzw. in ihn abgesenkt werden kann. Das druckseitig an der Pumpe montierte Rohrleitungsteil ist am unteren Ende des Pumpengehäuses montiert und mit der Förderrohrleitung lose über zwei gegeneinander liegende Flansche verbunden, zwischen denen sich eine durch einen Haltering befestigte Dichtung befindet. Beim Betrieb der Pumpe wird diese Dichtung durch den Flüssigkeitsdruck verformt und dichtet die Flanschverbindung nach außen ab, so daß eine flüssigkeitsdichte Verbindung der beiden Rohrleitungsteile erfolgt. Bei leichteren Pumpen wird eine fest installierte, mechanische Klammer zum dichten Verbinden der Rohrleitungsteile vorgeschlagen. Bei dieser bekannten Vorrichtung besteht die Gefahr, daß sich auf den Dichtringen größere Schmutzpartikel absetzen, die durch auslaufendes Schmutzwasser nicht mehr abgewaschen werden können, so daß die im Schmutzwasserbereich liegenden Dichtungen ausgewechselt werden müssen. Außerdem dürfen sich unterhalb der Pumpe keine Ablagerungen absetzen, da dann die korrekte Stellung der Rohrflansche relativ zueinander nicht mehr eingehalten werden kann.

Der Erfindung liegt die Aufgabe zugrunde, einen Behälter mit einer Tauchmotorpumpe und einer Förderrohrleitung, insbesondere zum Einsatz für Schmutzwasser und Fäkalien zu schaffen, mit dem die Montage bzw. Demontage der Tauchmotorpumpe ohne manuelle Arbeiten am Rohrleitungssystem im Inneren des Behälters möglich sowie das Einsetzen und Herausnehmen der Pumpe vereinfacht ist.

Diese Aufgabe wird dadurch gelöst, daß das gekrümmte Rohrleitungsteil oberhalb des Pumpengehäuses griffartig verläuft und daß sein freies Ende mit dem freien Ende der Förderrohrleitung durch eine selbstdichtende Steckkupplung verbindbar ist.

Durch die erfindungsgemäße Anordnung der mittels einer Steckkupplung verbindbaren Rohrleitungsteile kann die Pumpe durch bloßes Anheben an dem griffartigen, oberhalb des Pumpengehäuses verlaufenden Rohrleitungsteil aus dem Behälter entnommen werden, wobei sich die Rohrverbindung in der selbstdichtenden Steckkupplung löst. Es ist also nicht mehr erforderlich, daß manuelle Montagearbeiten an den Rohrmuffen oder Verbindungen durchgeführt werden müssen. Das Montagepersonal kommt in den meisten Fällen durch den oberhalb des Schmutzwasserspiegels verlaufenden griffartigen Rohrleitungsteil nicht mehr mit diesem in Berührung, so daß die Montage- bzw. Demontagearbeiten schnell und sauber durchgeführt werden können.

Die Steckkupplung am freien Ende der Förderrohrleitung ist vorzugsweise in einem muffenartig aufgeweiteten Anschlußstück fest angeordnet, so daß sie beim Herausziehen der Tauchmotorpumpe sicher im Anschlußstück zurückgehalten wird. Die Verbindung der Steckkupplung mit dem Anschlußstück kann z.B. über eine gegenseitige Verzahnung erfolgen.

Die Steckkupplung ist vorzugsweise als ringförmige Gummidichtung ausgebildet, die auf ihrer inneren Umfangsfläche eine oder mehrere umlaufende Dichtungslippen aufweisen kann. Das freie Ende des grifförmigen Rohrleitungsteiles weist vorzugsweise einen oder mehrere auf seiner äußeren Umfangsfläche umlaufende Dichtungswülste auf, gegen die die Dichtungslippen der Gummidichtung anliegen, so daß eine gute Dichtwirkung gegeben ist.

Das freie Ende des grifförmigen Rohrleitungsteiles kann einen auf seiner äußeren Umfangsfläche umlaufenden Begrenzungsflansch aufweisen, der im Abstand vom Ende abgeordnet ist, so daß eine definierte Eindringtiefe dieses Rohrleitungsteiles in die Steckkupplung gegeben ist. Der untere Teil des freien Endes des grifförmigen Rohrleitungsteiles ist vorzugsweise konisch zugespitzt ausgebildet, so daß das Einführen des freien Endes in die Steckkupplung erleichtert wird.

Die Erfindung ist in der Zeichnung beispielsweise veranschaulicht und wird im einzelnen anhand der Zeichnung im nachfolgenden erläutert. Es zeigen:
- Fig. 1: einen Schnitt durch einen Fäkalienhebebehälter mit eingesetzter Tauchmotorpumpe und
- Fig. 2: einen Schnitt durch die Steckkupplung mit eingesetztem Rohrleitungsteil.

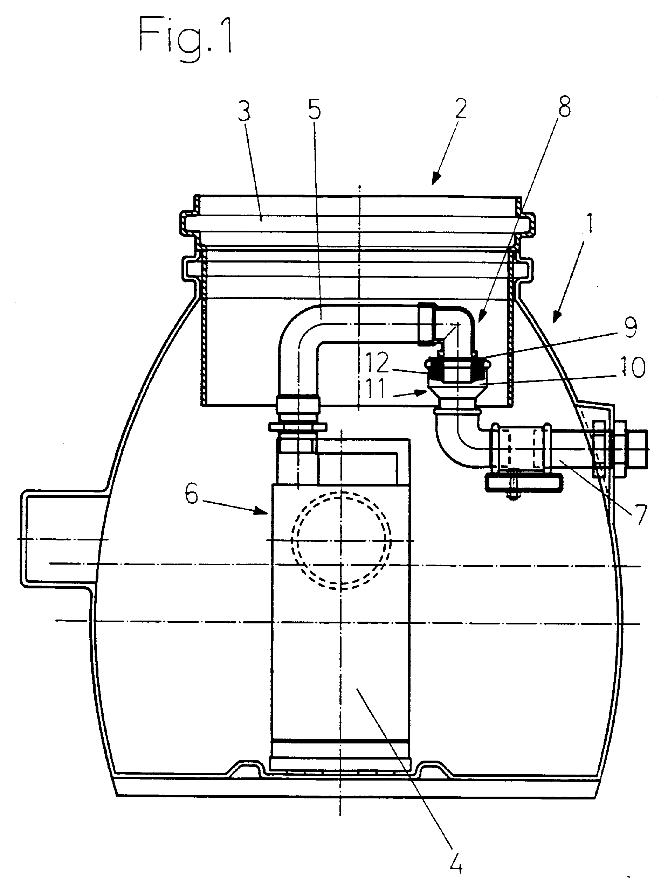

Der in Fig. 1 dargestellte Behälter 1 wird typischerweise für Abwasserhebeanlagen verwendet. Er weist eine obere Öffnung 2 auf, die durch einen Deckel 3 verschlossen ist. Im Inneren des Behälters 1 befindet sich eine Tauchmotorpumpe 4, die durch einen griffartigen Rohrleitungsteil 5, der oberhalb des Pumpengehäuses 6 verläuft, mit der Förderrohrleitung 7 verbunden ist, die durch die Behälterwand nach außen führt. Das freie Ende 8 des griffartigen Rohrleitungsteiles 5 ist dabei in einer Steckkupplung 9 angeordnet, die ihrerseits in einem muffenartigen Anschlußstück 10 sitzt, die das freie Ende 11 der Förderrohrleitung 7 bildet. Die Steckkupplung 9 wird durch eine ringförmige Gummidichtung 12 gebildet. Bei der dargestellten Anordnung ist es möglich, die Tauchmotorpumpe 4 durch bloßes Anheben am griffartigen Rohrleitungsteil 5 nach oben aus dem Behälter 1 herauszunehmen, ohne daß das Montagepersonal in Berührung mit dem Schmutzwasser kommt, da sich der Schmutzwasserspiegel gewöhnlich unterhalb der Förderrohrleitung 7 befindet.

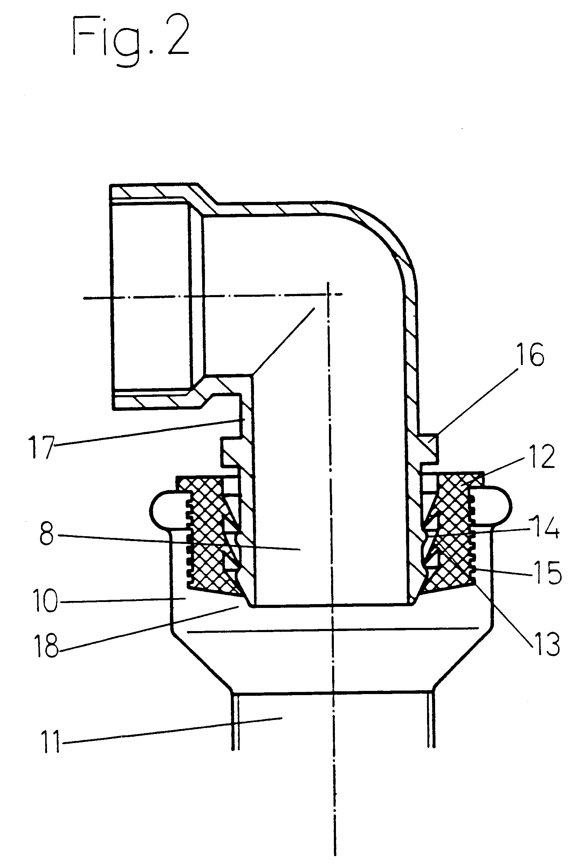

Der innere Aufbau der Steckkupplung 9 ist in Fig. 2 vergrößert dargestellt. Die ringförmige Gummidichtung 12 weist innere Dichtungslippen 13 auf, die gegen Dichtungswülste 14 am freien Ende 8 des griffartigen Rohrleitungsteiles 5 im Abstand angeordnet sind. Dadurch wird eine gute Dichtwirkung erreicht. Die ringförmige Gummidichtung 12 sitzt mittels einer Verzahnung 15 im Inneren des Anschlußstückes 10, so daß bei einem Herausnehmen des grifförmigen Rohrleitungsteiles 5 nicht zu befürchten ist, daß sich die Gummidichtung 12 aus dem Anschlußstück 10 löst.

Um die Eindringtiefe des griffartigen Rohrleitungsteiles in das Anschlußstück 10 zu begrenzen, ist an ihrer äußeren Umfangsfläche ein Begrenzungsflansch 16 vorgesehen, der ein zu tiefes Einstecken verhindert. Die Rohrwandung 17 des griffartigen Rohrleitungsteiles 5 ist im unteren Bereich 18 konisch zugespitzt, so daß ein leichtes Einführen des grifförmigen Rohrleitungsteiles 5 in die Steckkupplung 9 möglich ist.

Das freie Ende 8 des griffartigen Rohrleitungsteiles 5 verläuft etwa vertikal nach unten, während das freie Ende 11 der Förderrohrleitung 7 etwa vertikal nach oben verläuft.

### Bezugszeichenliste

1. Behälter
2. Öffnung
3. Deckel
4. Tauchmotorpumpe
5. griffartiger Rohrleitungsteil
6. Pumpengehäuse
7. Förderrohrleitung
8. freies Ende des griffartigen Rohrleitungsteiles
9. Steckkupplung
10. Anschlußstück
11. freies Ende der Förderrohrleitung
12. ringförmige Gummidichtung
13. Dichtungslippe
14. Dichtungswulst
15. Verzahnung
16. Begrenzungsflansch
17. Rohrwandung
18. unterer Bereich des grifförmigen Rohrleitungsteiles

## Patentansprüche

1. Behälter, insbesondere für Schmutzwasser und Fäkalien, mit einer oberen Öffnung, einer Tauchmotorpumpe und einer Förderrohrleitung, die seitlich dicht aus dem Behälter austritt, wobei die Tauchmotorpumpe ein druckseitig montiertes Rohrleitungsteil aufweist, das in einer vertikalen Ebene um 180° gekrümmt verläuft und dessen freies, etwa vertikal nach unten gerichtetes Ende mit einem freien, etwa vertikal nach oben gerichteten Ende der Förderrohrleitung im Inneren des Behälters verbindbar ist, **dadurch ge****kennzeichnet,** daß das gekrümmte Rohrleitungsteil (5) oberhalb des Pumpengehäuses (6) griffartig verläuft und daß sein freies Ende (8) mit dem freien Ende (11) der Förderrohrleitung (7) durch eine selbstdichtende Steckkupplung (9) verbindbar ist.

2. Behälter nach Anspruch 1, **dadurch** **gekennzeichnet,** daß die Steckkupplung (9) am freien Ende (11) der Förderrohrleitung (7) in einem muffenartig aufgeweiteten Anschlußstück (10) fest angeordnet ist.

3. Behälter nach Anspruch 1 oder 2, **dadurch** **gekennzeichnet**, daß die Steckkupplung (9) als ringförmige Gummidichtung (12) mit zumindest einer auf ihrer inneren Umfangsfläche umlaufenden Dichtungslippe (13) ausgebildet ist.

4. Behälter nach einem der Ansprüche 1 bis 3, **dadurch gekennzeichnet,** daß das freie Ende (8) des grifförmigen Rohrleitungsteiles (5) zumindest einen seine äußere Umfangsfläche umlaufenden, mit der Dichtungslippe (13) zusammenwirkenden Dichtungswulst (14) aufweist.

5. Behälter nach einem der Ansprüche 1 bis 4, **dadurch gekennzeichnet**, daß das freie Ende (8) des griffartigen Rohrleitungsteiles (5) einen seine äußere Umfangsfläche umlaufenden Begrenzungsflansch (16) aufweist, der vom unteren Bereich (18) des grifförmigen Rohrleitungsteiles (5) im Abstand angeordnet ist.

6. Behälter nach einem der Ansprüche 1 bis 5, **dadurch gekennzeichnet,** daß der untere Bereich (18) des freien Endes (8) des grifförmigen Rohrleitungsteiles (5) konisch zugespitzt ist.

## Claims

1. Tank, particularly for sewage and excrement, with an upper opening, a submersible motor-driven pump and a delivery pipe emerging from the side of the tank in leakproof fashion, where the discharge side of the submersible motor-driven pump is fitted with a section of pipe which, running in a vertical plane, is bent through 180° and whose free end points vertically downwards and can be connected to a free, roughly vertically-pointing end of the delivery pipe inside the tank, **characterised in that** the bent section of pipe (5) has the form of a grip handle above the pump housing (6) and that its free end (8) can be connected to the free end (11) of the delivery pipe (7) by means of a self-sealing plug-in coupling (9).

2. Tank as per Claim 1, **characterised in** **that** the plug-in coupling (9) is fixed in a fitting (10), flared in socket form, on the free end (11) of delivery pipe (7).

3. Tank as per Claim 1 or 2, **characterised** **in** **that** the plug-in coupling is designed as an annular rubber seal (12) with at least one sealing lip (13) running around its inner circumferential surface.

4. Tank as per one of the Claims 1 to 3, **characterised in that** the free end (8) of the grip-shaped pipe section (5) has at least one sealing bead (14) running around its outer circumferential surface and interacting with the sealing lip (13).

5. Tank as per one of the Claims 1 to 4, **characterised in that** the free end (8) of the grip-shaped pipe section (5) has a limiting flange (16) running around its outer circumferential surface which is located at a distance from the lower section (18) of the grip-shaped pipe section (5).

6. Tank as per one of the Claims 1 to 5, **characterised in that** the lower section (18) of the free end (8) of the grip-shaped pipe section (5) is tapered.

## Revendications

1. Réservoir, en particulier pour eaux polluéees et matières fécales, avec une ouverture supérieure, une moto-pompe plongeante et une conduite de refoulement sortant latéralement et de façon étanche du réservoir, où la moto-pompe plongeante est pourvue d'un tronçon de conduite monté du côté pression et s'étendant, cintré de 180°, dans un plan vertical, tronçon dont le bout libre, dirigé à peu près verticalement vers en bas, peut être raccordé, à l'intérieur du réservoir, à un bout libre, dirigé à peu près verticalement vers en haut, de la conduite de refoulement, réservoir caractérisé par ce que le tronçon de conduite cintré (5) se présente, au-dessus du corps de pompe (6) à la manière d'une poignée et que son bout libre (8) peut être raccordé au bout libre (11) de la conduite de refoulement (7) au moyen d'un accouplement enfichable auto-étanchant (9).

2. Réservoir suivant revendication 1, caractérisé par ce que l'accouplement enfichable (9) est disposé fixement, au bout libre (11) de la conduite de refoulement (7), dans une pièce de raccordement (10) évasée à la manière d'un manchon.

3. Réservoir suivant revendication 1 ou 2, caractérisé par ce que l'accouplement enfichable (9) est conçu comme joint annulaire en caoutchouc (12) avec au moins une lèvre d'étanchéité (13) circulaire sur sa surface circonférentielle intérieure.

4. Réservoir suivant l'une des revendications 1 à 3, caractérisé par ce que le bout libre (8) du tronçon de conduite (5) en forme de poignée présente au moins un bourrelet d'étanchéité (14) circulaire sur sa surface circonférentielle extérieure et concourant avec la lèvre d'étanchéité (13).

5. Réservoir suivant l'une des revendications 1 à 4, caractérisé par ce que le bout libre (8) du tronçon de conduite (5) en forme de poignée présente, sur sa surface circonférentielle extérieure, une bride de limitation (16) circulaire qui est disposée avec écart de la zone inférieure (18) du tronçon de conduite (5) en forme de poignée.

6. Réservoir suivant l'une des revendications 1 à 5, caractérisé par ce que la zone inférieure (18) du bout libre (8) du tronçon de conduite (5) en forme de poignée se termine en cône.
